# EUROPEAN PATENT SPECIFICATION

(11) **EP 4 570 538 B1**
(45) Date of publication and mention of the grant of the patent: **01.04.2026**
(21) Application number: 23215992.1
(22) Date of filing: 12.12.2023
(51) Int. Cl.: B60H 1/00, B60H 1/14, B60H 1/32

(54) **HEAT RECOVERY SYSTEM FOR A VEHICLE, AND VEHICLE COMPRISING SUCH A HEAT RECOVERY SYSTEM**
WÄRMERÜCKGEWINNUNGSSYSTEM FÜR EIN FAHRZEUG UND FAHRZEUG MIT EINEM SOLCHEN WÄRMERÜCKGEWINNUNGSSYSTEM
SYSTÈME DE RÉCUPÉRATION DE CHALEUR POUR UN VÉHICULE ET VÉHICULE COMPRENANT UN TEL SYSTÈME DE RÉCUPÉRATION DE CHALEUR

(43) Date of publication of application: 18.06.2025
(73) Proprietor: Volvo Truck Corporation, 405 08 Göteborg (SE)
(72) Inventor: Singh, Ranjeet, 482001 Jabalpur (IN); Manda, Goutam, 732121 MALDA (West Bengal) (IN)
(74) Representative: Lavoix

(56) References cited:
- EP-B1- 3 400 144
- DE-A1- 102017 200 409
- DE-A1- 102019 210 442
- US-B2- 10 996 000

## Description

### TECHNICAL FIELD

The disclosure relates generally to an air conditioning system for a vehicle. The invention relates to a heat recovery system for a fuel-cell vehicle, and to a vehicle comprising such a heat recovery system. The invention can be applied to heavy-duty vehicles, such as trucks, buses, and construction equipment, among other vehicle types. Although the invention may be described with respect to a particular vehicle, the disclosure is not restricted to any particular vehicle.

### BACKGROUND

Vehicles are usually equipped with an air conditioning system, configured to cool or heat the cabin, for the comfort of a driver and/or passenger(s) of the vehicle. A vehicle air conditioning system is working traditionally on Vapor Compression Refrigeration System principle, or VCRS in short. Such VCRS comprises a pump, which is used to move a fluid within a circuit of the VCRS. The pump consumes electricity, that is to say high-grade energy, which leads to high operation costs, up to 5% of power (work) from the vehicle's engine.

When the vehicle's engine is a fuel-cell, the fuel cell generates hot water and vapor. The heat energy contained in the hot water and vapor is not readily usable by other equipment of the vehicle and is called "low-grade energy". It is known to use a Vapor Absorption Refrigeration System, also known as VARS, to recover a part of this low-grade energy generated by the engine. Documents US-10 996 000-B2, DE-10 2017 200409-A1, DE-10 2019 210 442-A1 and EP-3 400 144-B1 disclose each known heat recovery systems.

The purpose of the invention is to provide an improved heat recovery system for a vehicle.

### SUMMARY

A first aspect of the invention concerns a heat-recovery system for recovering low-grade energy generated by an engine of a vehicle, the heat-recovery system being according to claim 1. The first aspect of the invention may seek to improve recovery of low-grade energy, for example heat, generated by the engine.
A technical benefit may include higher efficiency of low/grade energy in the form of heat. The heat recovery system may be used as a heating and cooling system, without taking high-grade energy from the engine, for example electric power from the fuel cell. In addition, liquid to liquid heat exchangers provide better efficiency compared to other types of exchangers such as gas-to-gas or gas-to-liquid. Liquid has better thermal conductivity property than gas, so it will absorb more heat from low grade energy source than gas.

According to the invention,
- the plurality of liquid-to-liquid heat exchangers includes a first heat exchanger and a second heat exchanger, which is different from the first heat exchanger. The first heat exchanger and second heat exchanger are connected in serial by the fluidic circuit, the refrigerant circulating sequentially through the first heat exchanger, then through the second heat exchanger, then through the vapor absorption refrigeration system.

Optionally in some examples:
- the refrigerant is configured to absorb the low-grade energy through the first heat exchanger when the refrigerant circulates in the fluidic circuit.

According to the invention,
- the engine also comprises a cooling circuit, filled with a liquid coolant that is configured to evacuate heat from the engine, and
- the refrigerant is configured to take heat from the coolant through the second heat exchanger when the refrigerant circulates in the fluidic circuit.
A technical benefit may include improving low-grade energy recovery thanks to a two-stage heat exchange. This two-stage heat exchanger will help to absorb more heat from various sources, i.e., exhaust water vapor from fuel cell (medium temperature) and hot coolant (high temperature) of fuel cell.

Optionally in some examples:
- when the heat recovery system is in a cooling cycle, the refrigerant leaving the second heat exchanger is configured to enter the vapor absorption refrigeration system, the vapor absorption refrigeration system being configured to cool a cabin of the vehicle.
A technical benefit may include using low-grade energy to cool the cabin. In conventional cabin cooling system various pump & compressor based system may be used to circulate the refrigerant, but in this vapor absorption refrigeration system (i.e. generator act as pump) waste heat has been used to circulate the refrigerant, which will increase the energy efficiency of the vehicle.

Optionally in some examples:
the heat-recovery system also comprises a liquid to air heat exchanger,
- when the heat recovery system is in a heating cycle, the refrigerant leaving the second heat exchanger is configured to enter the liquid-to-air heat exchanger,
- the liquid-to-air heat exchanger is configured to transfer heat from the refrigerant to a flow of air generated by a fan, so as to heat a cabin of the vehicle.
A technical benefit may include using low-grade energy to heat the cabin. In many conventional vehicle electric heater or diesel combustion heater has been used to heat the cabin, but in the proposed invention waste heat has been used to heat the cabin, which again will improve the energy efficiency of the vehicle.

Optionally in some examples:
the heat recovery system is configured to use the recovered low-grade energy for heating and air conditioning of a cabin of the vehicle.
A technical benefit may include improving the overall efficiency ratio of the vehicle when in cooling mode. In proposed invention, for both scenarios i.e. for heating & for cooling, waste heat have been used, so it will give the improved overall energy efficiency.

Optionally in some examples:
the heat-recovery system is configured to recover low-grade energy generated from a fuel cell of the vehicle, the low-grade energy being waste heat from water vapor or hot water generated by the fuel cell.
A technical benefit may include improving the overall efficiency ratio of the vehicle when in heating mode. In proposed invention, for both scenario i.e. for heating & for cooling, waste heat have been used, so it will give the improved overall energy efficiency.

A second aspect of the invention concerns a vehicle, comprising:
- an engine, which is configured to generate high-grade energy and low-grade energy, and
- the heat-recovery system as previously described.

According to the invention
- the engine is a fuel cell, low-grade energy including heat contained in water and/or vapor.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** represents an exemplary vehicle according to an example of the invention.
**FIG. 2** represents an exemplary heat recovery system belonging to the vehicle of figure 1, the heat recovery system being in a first working configuration.
**FIG. 3** represents the heat recovery system of figure 2, the heat recovery system being in a second working configuration.

### DETAILED DESCRIPTION

The detailed description set forth below provides information and examples of the disclosed technology with sufficient detail to enable those skilled in the art to practice the disclosure.

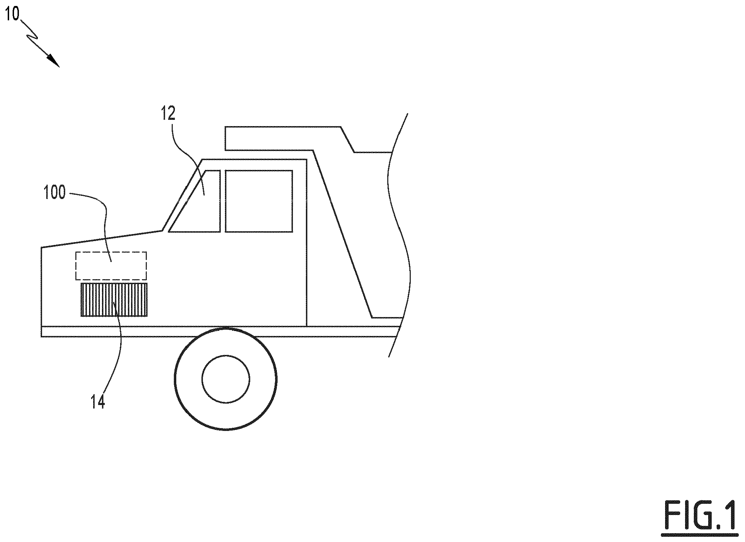

FIG. 1 represents an exemplary vehicle 10 according to the invention. In the illustrated example, the vehicle 10 is a dump truck. Alternatively, the vehicle 10 is a bus, or a truck, etc. The invention is not limited to a particular type of vehicle. The vehicle 10 comprises a cabin 12, in other words a driver and/or passenger area of the vehicle 10 that may be used for operating the vehicle 10 or resting.

The vehicle 10 comprises an engine 14. The engine 14 uses fuel from a tank 16 and dioxygen - also simply said oxygen and noted O₂ - from the air to produce high-grade energy used to move the vehicle 10 and, as a by-product, low-grade energy, mainly heat.

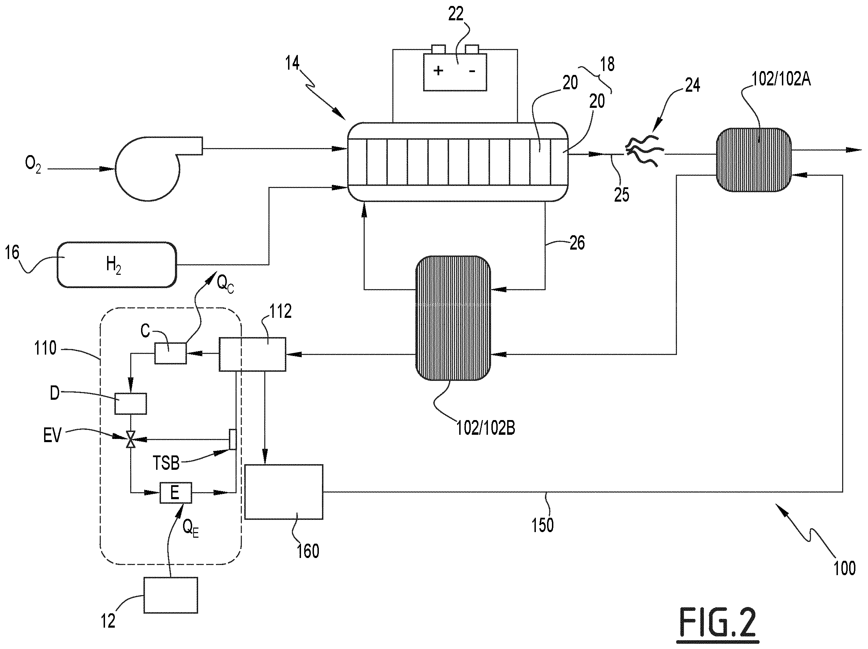

The engine 14 is preferably a fuel cell, as illustrated in figures 1 and 2. The fuel-cell comprises a stack 18 of unitary cells 20. The fuel cell uses dihydrogen - also simply said hydrogen, and noted H₂ - as fuel. Hydrogen is combined with oxygen in an electrochemical reaction to produce electricity as high-grade energy, while releasing water and heat. Water is in liquid form or in gaseous form, i.e. vapor. Electricity is further stored in an electricity storage device 22 and/or used by an electric motor - not shown - of the vehicle 10 to move the vehicle. Heated water/vapor, referenced 24, exits from the fuel cell through a pipe 25. The heat contained in the heated water - liquid or vapor - represents a first part of the low-grade energy generated by the fuel cell.

The vehicle 10 also comprises a cooling circuit 26, which is filled with a liquid coolant that circulates within the cooling circuit 26 so as to evacuate heat from the engine 14. The heat contained in the heated coolant represents a second part of the low-grade energy generated by the engine 14, here the fuel cell. In other words, the engine 14 is configured to generate high-grade energy and low-grade energy, respectively electricity and heat in the present example.

The vehicle 10 comprises a heat-recovery system 100, which is configured to recover, at least partially, low-grade energy generated by the engine 14 of the vehicle 10. In the illustrated example, the heat-recovery system 100 is configured to recover low-grade energy generated from the fuel cell of the vehicle 10, the low-grade energy being waste heat from water vapor or hot water generated by the fuel cell when in operation.

The heat-recovery system 100 is described with reference to figure 2, where the heat-recovery system 100 is working in a cooling cycle. The heat-recovery system 100 comprises a plurality of heat exchangers 102. The heat exchangers 102 are liquid-to-liquid heat exchanger, which provide better energy transfer compared to other types of heat exchangers such as gas-to-gas or gas-to-liquid. At least one of the plurality of liquid-to-liquid heat exchangers 102 is configured to extract heat from the low-grade energy generated by the engine 14 of the vehicle 10.

The heat-recovery system 100 also comprises a vapor absorption refrigeration system 110, also known under the acronym VARS. The functioning of VARS is briefly explained further in the present description.

The heat-recovery system 100 also comprises a fluidic circuit 150, which is filled with a refrigerant and which links the plurality of liquid-to-liquid heat exchangers 102 and the vapor absorption refrigeration system 110. The refrigerant is preferably liquid.

The heat-recovery system 100 also comprises a pump 160, to circulate the refrigerant through the fluidic circuit.

Preferably, the plurality of liquid-to-liquid heat exchangers 102 includes a first heat exchanger 102A and a second heat exchanger 102B, which is different from the first heat exchanger 102A. In the illustrated example, the first heat exchanger 102A and second heat exchanger 102B are connected in serial by the fluidic circuit, the refrigerant circulating sequentially through the first heat exchanger, then through the second heat exchanger, then through the vapor absorption refrigeration system.

The first heat exchanger 102A is connected to the pipe 25. The refrigerant is configured to absorb the low-grade energy, contained in the heated water/vapor 24, through the first heat exchanger 102A when the refrigerant circulates in the fluidic circuit 150.

The second heat exchanger 102B is arranged the cooling circuit 26. The refrigerant is configured to take heat from the coolant through the second heat exchanger 102B when the refrigerant circulates in the fluidic circuit 150.

In the illustrated example, the VARS 110 exchanges thermal energy with the circuit 150 through a third heat exchanger 112. The VARS comprises a condenser C, a receiver D, an evaporator E, a temperature sensing by pass TSB, and an expansion valve EV. When the VARS 110 works, the VARS 110 absorbs a first flow of energy QE from the cabin 12. More precisely, the evaporator E absorbs the first flow of energy QE. In other words, the cabin 12 is cooled down. At the same time, the VARS 110 releases a second flow of energy Qc. More precisely, the condenser C releases the second flow of energy Qc, for example to the outside environment of the vehicle 10. The functioning of VARS 110 is known in itself and is not detailed further in the present description.

When the heat recovery system 100 works in the cooling cycle, the refrigerant leaving the second heat exchanger 102B enters the third heat exchanger 112 and transfers heat, i.e. low grade energy, to the vapor absorption refrigeration system 110, the vapor absorption refrigeration system being configured to cool the cabin 12 of the vehicle 10. In other words, the recovered low-grade energy is configured to be used for air conditioning of the cabin 12 of the vehicle.

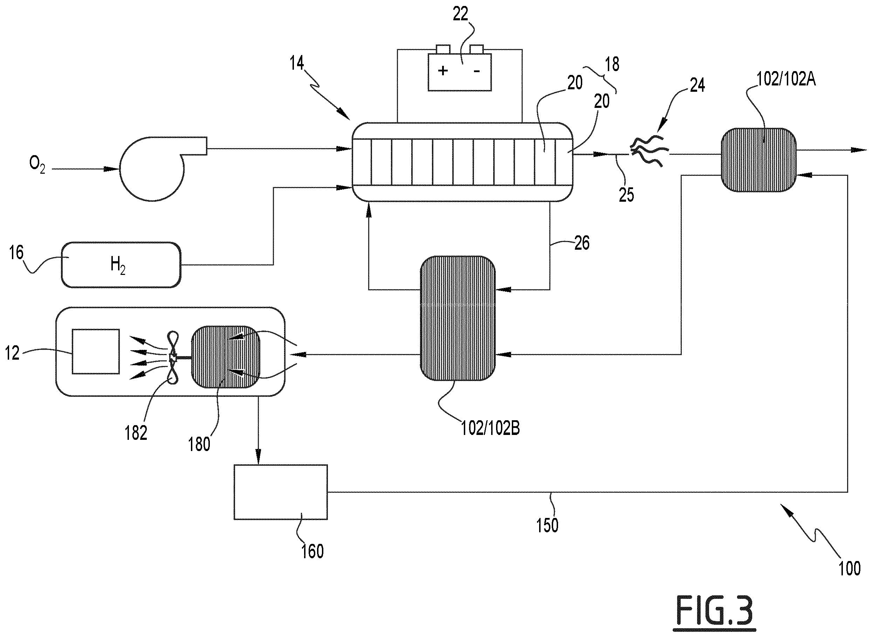

The heat-recovery system 100 is configured to switch between the cooling cycle, illustrated in figure 1, and a heating cycle, illustrated in figure 3. In figure 3, the VARS 110 is not represented. The heat-recovery system 100 advantageously comprises a fourth heat exchanger 180, which is connected to the fluidic circuit 150. The fourth heat exchanger 180 is preferably a liquid to air heat exchanger. A fan 182 is provided to generate a flow of air through the fourth heat exchanger 180, said flow of air being further sent inside the cabin 12 of the vehicle 10.

When heat-recovery system 100 is in the heating cycle, the refrigerant leaving the second heat exchanger 102B is configured to enter the fourth heat exchanger 180. A part of the heat contained in the refrigerant is transferred to the flow of air generated by the fan 182 and enables heating the cabin 12. In other words, the recovered low-grade energy is configured to be used for heating the cabin 12 of the vehicle 10.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

It is to be understood that the present disclosure is not limited to the aspects described above and illustrated in the drawings; rather, the skilled person will recognize that many changes and modifications may be made within the scope of the present invention as defined in the appended claims. In the drawings and specification, there have been disclosed aspects for purposes of illustration only and not for purposes of limitation, the scope of the invention being set forth in the following claims.

## Claims

1. A heat-recovery system (100) for recovering low-grade energy generated by an engine (14) of a vehicle (10), the engine being a fuel cell, the heat-recovery system (100) comprising:
- a plurality of liquid-to-liquid heat exchangers (102),
- a vapor absorption refrigeration system (110),
- a fluidic circuit (150), which is filled with a refrigerant and which links the plurality of liquid-to-liquid heat exchangers (102) and the vapor absorption refrigeration system (110),
- a pump (160), to circulate the refrigerant through the fluidic circuit (150),
wherein at least one of the plurality of liquid-to-liquid heat exchangers (102) is configured to extract heat from the low-grade energy generated by an engine (14) of the vehicle (10), wherein:
- the plurality of liquid-to-liquid heat exchangers (102) includes a first heat exchanger (102A) and a second heat exchanger (102B), which is different from the first heat exchanger (102A), the first and second heat exchanger (102B) being connected in serial by the fluidic circuit (150), the refrigerant circulating sequentially:
• through the first heat exchanger (102A),
• through the second heat exchanger (102B), then
• through the vapor absorption refrigeration system (110), **characterized in that**
- the engine (14) also comprises a cooling circuit (26), filled with a liquid coolant that is configured to evacuate heat from the engine (14),
- the refrigerant is configured to take heat from the coolant through the second heat exchanger (102B) when the refrigerant circulates in the fluidic circuit (150).

2. The heat-recovery system (100) according to claim 1, wherein:
- the refrigerant is configured to absorb the low-grade energy through the first heat exchanger (102A) when the refrigerant circulates in the fluidic circuit (150).

3. The heat-recovery system (100) according to any one of claims 1 or 2, wherein, in a cooling cycle, the refrigerant leaving the second heat exchanger (102B) is configured to enter the vapor absorption refrigeration system (110), the vapor absorption refrigeration system (110) being configured to cool a cabin (12) of the vehicle (10).

4. The heat-recovery system (100) according to any one of claims 1 or 2, wherein:
- the heat-recovery system (100) also comprises a liquid to air heat exchanger (180),
- in a heating cycle, the refrigerant leaving the second heat exchanger (102B) is configured to enter the liquid-to-air heat exchanger (180),
- the liquid-to-air heat exchanger is configured to transfer heat from the refrigerant to a flow of air generated by a fan, so as to heat a cabin (12) of the vehicle (10).

5. The heat-recovery system (100) according to any one of claims 1 to 4, wherein the recovered energy is configured to be used for heating and air conditioning of a cabin (12) of the vehicle (10).

6. The heat-recovery system (100) according to any one of claims 1 to 5, wherein the heat-recovery system (100) is configured to recover low-grade energy generated from a fuel cell of the vehicle (10), the low-grade energy being waste heat from water vapor or hot water generated by the fuel cell.

7. A vehicle (10), comprising:
- an engine (14) being a fuel cell, which is configured to generate high-grade energy and low-grade energy,
- the heat-recovery system (100) according to any-one of claims 1 to 6.

## Patentansprüche

1. Wärmerückgewinnungssystem (100) zum Rückgewinnen von Energie niedriger Qualität, die von einem Motor (14) eines Fahrzeugs (10) erzeugt wird, wobei der Motor eine Brennstoffzelle ist, das Wärmerückgewinnungssystem (100) umfassend:
- eine Vielzahl von Flüssig/Flüssig-Wärmetauschern (102),
- ein Dampfabsorption-Kühlsystem (110),
- einen Fluidikkreislauf (150), der mit einem Kältemittel gefüllt ist und der die Vielzahl von Flüssig/Flüssig-Wärmetauschern (102) und das Dampfabsorption-Kühlsystem (110) verbindet,
- eine Pumpe (160), um das Kältemittel durch den Fluidikkreislauf (150) umzuwälzen,
wobei mindestens einer der Vielzahl von Flüssig/Flüssig-Wärmetauschern (102) konfiguriert ist, um Wärme aus der von einem Motor (14) des Fahrzeugs (10) erzeugten niedergradigen Energie zu extrahieren, wobei:
- die Vielzahl von Flüssig/Flüssig-Wärmetauschern (102) einen ersten Wärmetauscher (102A) und einen zweiten Wärmetauscher (102B) umfasst, der sich von dem ersten Wärmetauscher (102A) unterscheidet, wobei der erste und der zweite Wärmetauscher (102B) durch den Fluidkreislauf (150) in Reihe geschaltet sind und das Kältemittel nacheinander zirkuliert:
• durch den ersten Wärmetauscher (102A),
• durch den zweiten Wärmetauscher (102B), dann
• durch das Dampfabsorptions-Kühlsystem (110), **dadurch gekennzeichnet, dass**
- der Motor (14) auch einen Kühlkreislauf (26) umfasst, der mit einem flüssigen Kühlmittel gefüllt ist, das konfiguriert ist, um Wärme aus dem Motor (14) abzuleiten,
- das Kältemittel konfiguriert ist, um dem Kühlmittel über den zweiten Wärmetauscher (102B) Wärme zu entziehen, wenn das Kältemittel in dem Fluidkreislauf (150) zirkuliert.

2. Wärmerückgewinnungssystem (100) nach Anspruch 1, wobei:
- das Kältemittel konfiguriert ist, um die niedriggradige Energie durch den ersten Wärmetauscher (102A) zu absorbieren, wenn das Kältemittel in dem Fluidkreislauf (150) zirkuliert.

3. Wärmerückgewinnungssystem (100) nach einem der Ansprüche 1 oder 2, wobei in einem Kühlzyklus, das den zweiten Wärmetauscher (102B) verlassende Kältemittel konfiguriert ist, um in das Dampfabsorptions-Kühlsystem (110) einzutreten, wobei das Dampfabsorptions-Kühlsystem (110) konfiguriert ist, um einen Innenraum (12) des Fahrzeugs (10) zu kühlen.

4. Wärmerückgewinnungssystem (100) nach einem der Ansprüche 1 oder 2, wobei:
- das Wärmerückgewinnungssystem (100) auch einen Flüssig/Luft-Wärmetauscher (180) umfasst,
- in einem Heizzyklus ist das den zweiten Wärmetauscher (102B) verlassende Kältemittel konfiguriert, um in den Flüssig/-Luft-Wärmetauscher (180) einzutreten,
- der Flüssigkeit/Luft-Wärmetauscher konfiguriert ist, um Wärme von dem Kältelmittel auf einen von einem Lüfter erzeugten Luftstrom zu übertragen, um einen Innenraum (12) des Fahrzeugs (10) zu heizen.

5. Wärmerückgewinnungssystem (100) nach einem der Ansprüche 1 bis 4, wobei die rückgewonnene Energie konfiguriert ist, um zum Heizen und Klimatisieren einer Kabine (12) des Fahrzeugs (10) verwendet zu werden.

6. Wärmerückgewinnungssystem (100) nach einem der Ansprüche 1 bis 5, wobei das Wärmerückgewinnungssystem (100) konfiguriert ist, um niedriggradige Energie zurückzugewinnen, die von einer Brennstoffzelle des Fahrzeugs (10) erzeugt wird, wobei die nierdriggradige Energie Abwärme von Wasserdampf oder Heißwasser ist, die von der Brennstoffzelle erzeugt wird.

7. Fahrzeug (10), umfassend:
- einen Motor (14), der eine Brennstoffzelle ist,
die konfiguriert ist, um hochgradige Energie und niedriggradige Energie zu erzeugen,
- das Wärmerückgewinnungssystem (100) nach einem der Ansprüche 1 bis 6.

## Revendications

1. Système de récupération de chaleur (100) pour récupérer l'énergie de faible qualité générée par un moteur (14) d'un véhicule (10), le moteur étant une pile à combustible, le système de récupération de chaleur (100) comprenant :
- une pluralité d'échangeurs de chaleur liquide-liquide (102),
- un système de réfrigération à absorption de vapeur (110),
- un circuit fluidique (150), qui est rempli d'un réfrigérant et qui relie la pluralité d'échangeurs de chaleur liquide-liquide (102) et le système de réfrigération à absorption de vapeur (110),
- une pompe (160), pour faire circuler le réfrigérant dans le circuit fluidique (150), dans lequel au moins un de la pluralité d'échangeurs de chaleur liquide-liquide (102) est configuré pour extraire la chaleur de l'énergie de faible qualité générée par un moteur (14) du véhicule (10), dans lequel :
- la pluralité d'échangeurs de chaleur liquide-liquide (102) comprend un premier échangeur de chaleur (102A) et un second échangeur de chaleur (102B), qui est différent du premier échangeur de chaleur (102A), le premier et le second échangeur de chaleur (102B) étant reliés en série par le circuit fluidique (150), le réfrigérant circulant successivement :
• à travers le premier échangeur de chaleur (102A),
• à travers le second échangeur de chaleur (102B), puis
• à travers le système de réfrigération à absorption de vapeur (110), **caractérisé en ce que**
- le moteur (14) comprend également un circuit de refroidissement (26), rempli d'un liquide de refroidissement qui est configuré pour évacuer la chaleur du moteur (14),
- le réfrigérant est configuré pour prendre la chaleur du liquide de refroidissement à travers le second échangeur de chaleur (102B) lorsque le réfrigérant circule dans le circuit fluidique (150).

2. Système de récupération de chaleur (100) selon la revendication 1, dans lequel :
- le réfrigérant est configuré pour absorber l'énergie de faible qualité à travers le premier échangeur de chaleur (102A) lorsque le réfrigérant circule dans le circuit fluidique (150).

3. Système de récupération de chaleur (100) selon l'une quelconque des revendications 1 ou 2, dans lequel, dans un cycle de refroidissement, le réfrigérant quittant le second échangeur de chaleur (102B) est configuré pour entrer dans le système de réfrigération à absorption de vapeur (110), le système de réfrigération à absorption de vapeur (110) étant configuré pour refroidir un habitacle (12) du véhicule (10).

4. Système de récupération de chaleur (100) selon l'une quelconque des revendications 1 ou 2, dans lequel :
- le système de récupération de chaleur (100) comprend également un échangeur de chaleur liquide-air (180),
- dans un cycle de chauffage, le réfrigérant quittant le second échangeur de chaleur (102B) est configuré pour entrer dans l'échangeur de chaleur liquide-air (180),
- l'échangeur de chaleur liquide-air est configuré pour transférer la chaleur du réfrigérant à un flux d'air généré par un ventilateur, de façon à chauffer un habitacle (12) du véhicule (10).

5. Système de récupération de chaleur (100) selon l'une quelconque des revendications 1 à 4, dans lequel l'énergie récupérée est configurée pour être utilisée pour le chauffage et la climatisation d'un habitacle (12) du véhicule (10).

6. Système de récupération de chaleur (100) selon l'une quelconque des revendications 1 à 5, dans lequel le système de récupération de chaleur (100) est configuré pour récupérer l'énergie de faible qualité générée par une pile à combustible du véhicule (10), l'énergie de faible qualité étant la chaleur perdue de la vapeur d'eau ou de l'eau chaude générée par la pile à combustible.

7. Véhicule (10), comprenant :
- un moteur (14) étant une pile à combustible,
qui est configurée pour produire de l'énergie de haute qualité et de l'énergie de faible qualité,
- le système de récupération de chaleur (100) selon l'une quelconque des revendications 1 à 6.
